# EUROPEAN PATENT APPLICATION

(11) **EP 1 291 877 A1**
(43) Date of publication of application: **12.03.2003**
(21) Application number: 02255914.0
(22) Date of filing: 23.08.2002
(51) Int. Cl.: G11B 33/04

(54) **Storage unit for media containers such as compact disc containers or similar**

(30) Priority: 24.08.2001 US 938306
(71) Applicant: Sunhing Millennium Ltd, Kowloon, Hong Kong (CN)
(72) Inventor: Lau, Wai-Ming, New Territories, Hong Kong (CN); Bennett, Jason, Mid Levels, Hong Kong (CN)
(74) Representative: Alexander, Thomas Bruce

(57) **Abstract**

This invention relates to a storage unit for digital media containers such as compact disc jewel boxes. The unit contains a plurality of stack retaining means for the jewel boxes and rests on a base support allowing the unit to extend directly vertical. The base support may then be moved to a second position to extend a portion behind the unit for greater stability when in a second orientation.

## Description

### FIELD OF THE INVENTION

This invention relates to a storage unit for, in particular although not necessarily solely, digital media containers such as compact disc jewel boxes. It will be appreciated that the form of media itself could be analogue, digital or any other media or other general item stored in similar containers. This invention uses compact disc containers throughout as being typical regular-shaped items requiring storage and easy individual access.

### BACKGROUND TO THE INVENTION

With the increase in the use of media such as compact discs, often supplied in substantially regularly sized flat containers, comes a need for new forms of storage containers or holders for the disc containers themselves.

Whether used in domestic or business situations, such holders should be aesthetically pleasing and allow individual access to each of the containers. Although the containers can be stacked in cabinets or any other storage items, such methods do not always allow easy scanning of the containers themselves for selection and access to one container without disturbing the others.

A preferred form of storage unit has been previously provided, generally in tower-shaped holders, for a multiplicity of such containers. Any individual container is accessible, generally from the front face of the tower and the containers are held on rails, groves or similar guides within the tower to retain and separate each container.

One difficulty with such tower storage units is that they have a relatively high height to base area ratio. This makes them relatively unstable and prone to tip over to cause damage to the unit itself, the contents or to surrounding objects or individuals. Particularly in domestic situations, unstable CD towers may not be desirable in the presence of small children.

In an attempt to improve the stability, a prior solution has been devised and is shown in UK patent application publication No. GB 2304274.

The embodiment shown in GB 2304274 uses one, or preferably two, rotating legs that extend behind the tower such that the tower leans backwards over the extending legs. The extending legs increase the effective base area and lengthen at least the effective depth of the base. With the tower leaning backwards, which also shifts the centre of gravity of the tower more towards the mid-point of the new effective depth with the legs extended, a more stable arrangement is provided.

In this prior solution, an alternative configuration is provided in which the legs may be rotated to an out-of-use position within the tower and the tower may be fixed vertically to a wall or similar.

However, there are some drawbacks to this prior solution.

In providing a tower that leans backwards onto the extending legs, it is necessary to cut the base at an angle. The base which is formed by the bottom edges of the sidewalls is no longer perpendicular to the front or rear faces and, hence, the unit is incapable of being a freestanding unit in a vertical orientation. The only manner in which it can be mounted vertically is for the tower to be fixed to a wall by its rear face or the rear edges of the sidewalls.

When used in many situations such as domestic living areas, the position of the tower may not be permanent as room arrangements may change over time. If the unit is fixed to a wall to provide a vertical orientation, such fixings may cause damage or unsightly marks if the unit is subsequently shifted. As a result, the only alternative is to use the legs which may cause the tower to protrude from a wall further than may be desired in some circumstances. By having to extend the legs, the unit requires placement further into the room which may not align with surrounding items. Similarly, by leaning backwards this may cause the unit to look misaligned and unsightly adjacent other furniture.

In the case of a user that may be willing to compromise stability in return for placement of the tower directly adjacent a wall and yet without fixing the tower to that wall, no such option is provided by this prior solution,

Even if affixed to a wall, it is noticeable that the prior solution only provides a small bearing portion near the front edge that may contact a support surface. Therefore, the majority of the vertical load of the tower must be carried either by the fixings to the wall, such that said fixings will need to substantially increase the size and/or number, or is carried through that relatively small bearing surface towards the front which can increase damage to floor coverings or the like. In spreading the load over a larger base area, there may be reduced damage to floor coverings and traditional housings in the form of rectangular prisms are often preferred in such circumstances.

A yet further problem with the embodiment described in GB 2304274 is that the legs, once extended, only provide stability in a single plane. In the transverse direction, the legs do not increase the width of the base of the tower to improve stability.

A yet further disadvantage of the invention described in GB 2304274 is that the legs require a catch or fastener to lock rotation in the extended position. Such a catch or fastener may be prone to failure and may detract from the visual appearance of the sidewall in having to provide a further aperture.

### OBJECT OF THE INVENTION

It is an object of the present invention to provide a storage unit for media containers such as compact disc containers that may overcome some of the disadvantages of the prior art or at least provide the public with a useful choice.

### SUMMARY OF THE INVENTION

Accordingly, in a first aspect, the invention may broadly be said to consist in a storage unit for holding a plurality of substantially regular-shaped media containers comprising:
- at least two support members;
- a plurality of retaining means to hold said substantially regular-shaped media containers connected to said support members;
- a base support movable between at least a first and a second position;
- wherein said base support is substantially within the area defined by a projection of said plurality of retaining means and forms at least a part of an underside on which said storage unit may rest on a support surface when in said first position; and
- wherein said base support extends to contact a support surface beyond the area defined by the projection of said plurality retaining means when in said second position.

Preferably said at least two support members comprise at least two sidewalls.

Preferably said plurality of retaining means are contained within said sidewalls.

Preferably said base support is substantially within the area defined by a projection of said at least two sidewalls when in said first position and said base support extends beyond the area defined by the projection of said at least two sidewalls when in said second position.

Preferably said base support extends to contact a support surface behind said storage unit.

Preferably said storage unit is tilted backwards in the direction of the said base support when said base support is in said second position.

Preferably said sidewalls have at least front, rear and bottom edges.

Preferably a substantially portion of said bottom edge is provided at non-perpendicular angle to said front or rear edges such that at least a front portion of said bottom edge may contact a support surface when said unit is leaned backwards with said base support extended in said second position.

Preferably said base support provides a surface substantially perpendicular to said front or rear edges and forming at least a part of an underside of said unit when in said first position such that said unit may stand substantially vertically on said support surface.

Preferably said base support was mounted on at least one pivotal connection to rotate between said first and said second positions.

Preferably said base support is pivotally mounted to at least one of said sidewalls.

Preferably said base support is pivotally mounted towards a rear edge of at least one of said sidewalls.

Preferably said base support resides between the bottom edge of said sidewalls and said support surface when in said first position.

Preferably said base support provides an upper surface within an angle to cooperate and rest against said angled portion of said bottom edge of said sidewall and a lower surface to reside against a support surface.

Preferably said base support may comprise at least one extending portion that extends both behind said storage unit and extends to the side and beyond the plane of said sidewalls when in said second position.

### BRIEF DESCRIPTION OF THE DRAWINGS

Preferred embodiments of the invention will now be described with reference to the following drawings in which:
- Fig. 1 shows a perspective elevational view of one embodiment of the invention when said base support is in a first position;
- Fig. 2 shows a perspective elevational view of the unit of Fig. 1 with said base support in a second position;
- Fig. 3 shows a perspective elevational view of a further embodiment of the invention when said base support is in a second position;
- Fig. 4 shows a rear elevational view of the embodiment of Fig. 3;
- Fig. 5 shows a perspective view of a lower portion of the embodiment of Fig. 3 when said base support is in a first position;
- Fig. 6 shows a perspective view of the apparatus of Fig. 5 when said base support is in a second position;
- Fig. 7 shows a perspective view of the apparatus of Figs. 5 and 6 when said base support is intermediate of said first and second positions; and
- Fig. 8 shows an underside view of the apparatus of Figs. 3 to 7 when said base support is in a second position.

### DETAILED DESCRIPTION OF PREFERRED EMBODIMENTS

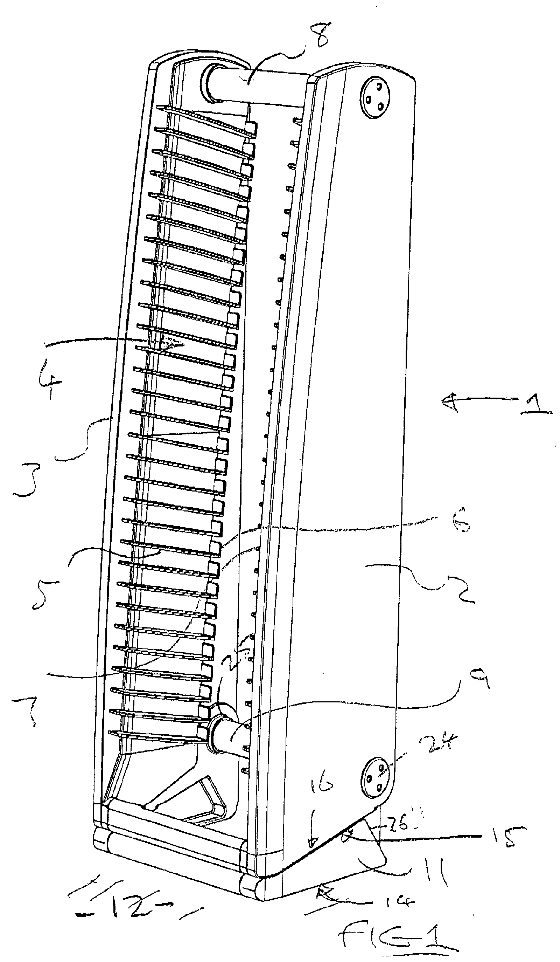

Although the invention may take many forms, at least a preferred embodiment is shown in Fig. 1 when in a first or vertical orientation.

In this embodiment, a storage unit 1 is shown. This particular embodiment shows a unit having some at least two sidewalls 2 and 3. It should be appreciated that alternative configurations could incorporate more sidewalls, however, a storage unit 1 for substantially thin rectangular objects is likely to provide at least two sides of a polygon in cross-section. A back wall may be optional. Other configurations may use columns rather than solid sidewalls although even in such configurations the edges of plates held by the columns to support the objects may provide virtual sidewalls.

It is usual in such configurations to provide an open front face 3 from which the stored containers may be accessed and replaced. By providing a substantially entirely open front 4, labels on outer faces of containers (not shown) may be read to assist with selection.

The containers (not shown) may be suspended between or supported or a plurality of retaining means such as ledges, shelves, channels, grooves, protruding studs or fixings, etc.

In this embodiment, ledges 5, 7 may be provided in substantially matching pairs on an internal side of said sidewalls 2, 3. Preferably, a plurality of such pairs may be provided. To support a rear face of said containers, particularly if said unit 1 is rotated rearwardly, a stop 6 extends upwardly from at least one of each pair of ledges 5, 7. This acts to stop compact disk containers from sliding freely to fall behind, in this instance, a rear face of said unit 1.

As shown in Fig. 1, the invention can comprise only two sidewalls 2, 3 and these walls may be supported and separated by one or more connecting members or struts 8, 9. The manner in which the connections to the sidewalls is made is relatively unimportant and would normally be partly determined by the material choice for the unit 1 and the aesthetic design required.

The storage unit 1 is supported on a base support 11 which, as explained subsequently, is capable of assuming at least a first and a second position or orientation. The position demonstrated in Fig. 1 has the base support forming or providing at least a portion of the support on which the unit 1 may be freestanding when placed on a support surface 12.

In this embodiment and position, the base support 11 is generally positioned under and within a proj ection of the sidewalls 2 and 3 onto the support surface 12.

It should be noted that base support 11 in this embodiment provides the entire contact surface between the unit and the support surface. Of course, this is not essential and a small base support 15 may allow portions of the underside of the sidewalls or alternative portions contact the support surface. This embodiment provides an underside 14 to the base support and an upper surface 15 so that the underside edge 16 rests entirely on the base support 11.

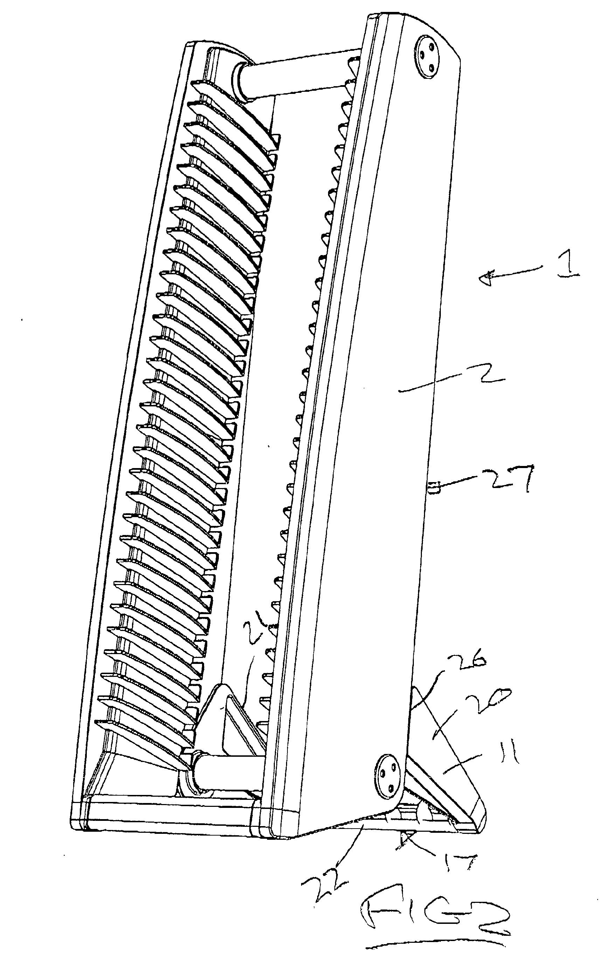

Referring to Fig. 2, the base support 11 is now orientated into a second position. In this position, the contact point 17 of the base support 11 with the support surface is extended out of the area defined by the footprint of the unit in its normal compact configuration. The contact point 17 is outside the area defined by the projection of the sidewalls and front and rear surfaces and the support surface. Hence the footprint of the unit is increased.

In this preferred embodiment, the contact point 17 extends behind the rear face of the unit. Similar extending base supports generally in the form of legs could be provided from alternative or additional faces for stability in alternative directions.

In general one of the directions of greatest risk is in the forward direction. By extending the contact point 17 behind the unit and leaning the unit backwards from its almost vertical orientation, the unit gains greater stability from tipping forwards due to the rearward shift of the centre of mass.

This particular base support 11 extends to legs 20, 21 that are interconnected to each other at the distal ends by a bearing support 22. Other embodiments could extend only a single leg or two legs without the bearing support 22.

It can be seen that the base support 11 is pivotally mounted to rotate between the first and second positions in the embodiments shown in Figs. 1 and 2. The pivotal connections 24, 25 conveniently provided by one of the connecting members 9.

It will be appreciated that other movements between first and second positions are possible such as sliding base portions, telescopic extending legs, etc.

In rotating to the extended position shown in Fig. 2, it can be seen that a face 26 of the base support 11 rotates to bear against the rear face 27 of the sidewall 2 such that further rotation of the base support 11 is limited. This provides a stable support for the apparatus with the base support in the extended position.

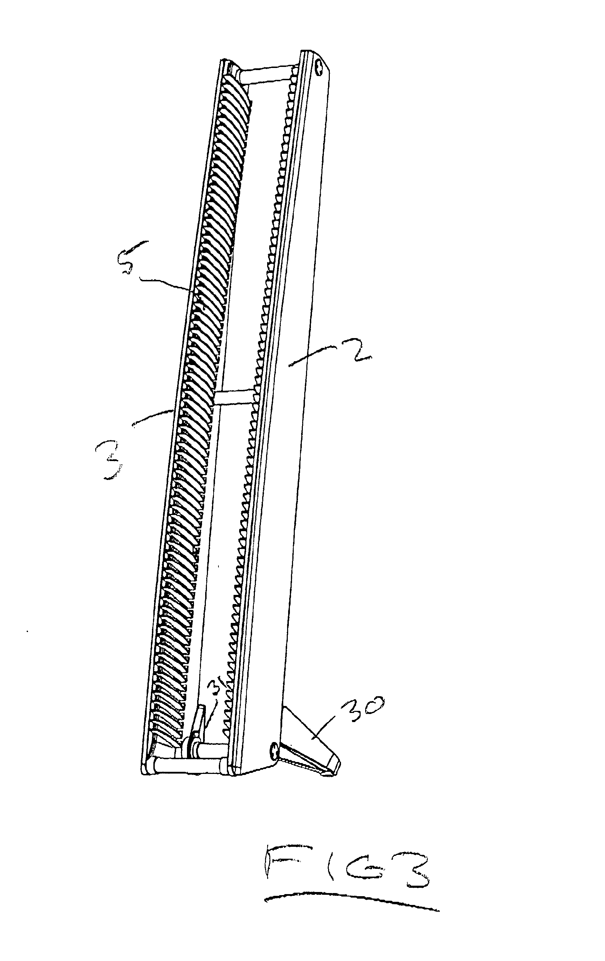

A yet further embodiment of the apparatus is shown in Fig. 3. It may be noted that this is an extended embodiment in which the overall height of the unit is considerably greater than that of the previous embodiment. Otherwise, the majority of the structure is similar. Again sidewalls 2 and 3 are employed carrying a plurality of supports 5 for media containers.

In providing a tower unit as shown in Fig. 3 having an increased height to width and depth ratios, stability is an even greater problem. To a limited extent in the previous embodiment, stability in a sideways direction is improved by a slightly greater width to the units than depth. However, the stability in the sideways direction may be more significantly a problem in a tower unit as shown in Fig. 3. In this embodiment, the base support 11 is divided into two separate legs 30 and 31. Again each is pivotally mounted and rotates to an extended position behind the unit.

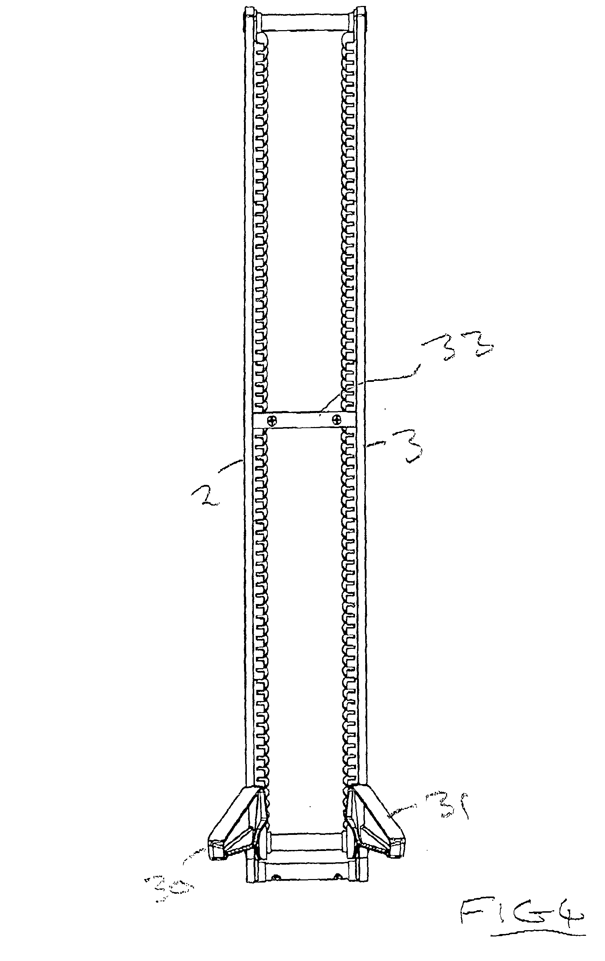

Turning to Fig. 4, a rear view of this further embodiment is shown. Again the legs 30 and 31 are shown in the extended position and it can be seen that the legs do not extend directly behind the unit parallel with the sidewalls 2 and 3. Instead, the legs are sprayed outward to assist and providing greater stability laterally.

This extended version also provides an additional intermediate connecting member or strut 33 between the rear edges of the sidewalls 2 and 3. This assists in supporting the structure substantially at its midpoint.

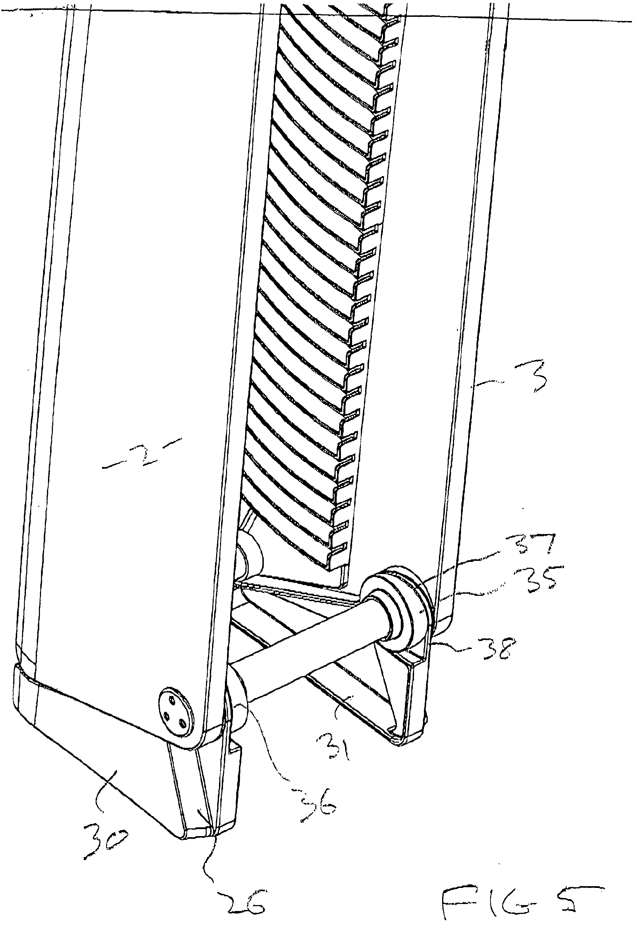

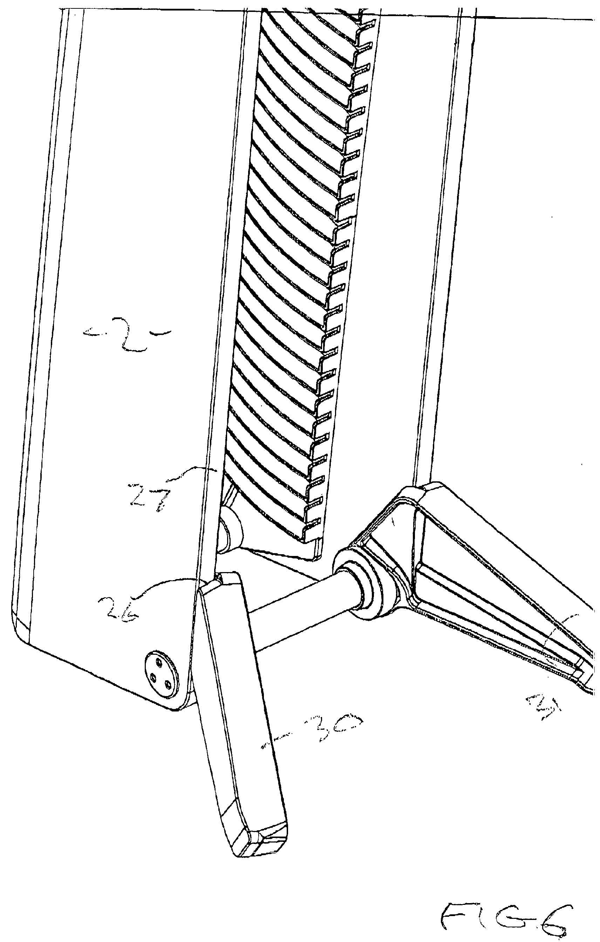

Figs. 5 and 6 show the lower portion of the tower embodiment with the legs 30 and 31 in a first position and a second position respectively. From Fig. 5, it can be seen that the legs 30 and 31 are substantially parallel to the sidewalls 2 and 3 and directly beneath those walls when in a first position. However, the rotating joint 35, 36 for each leg includes an angled surface 37 acting as a guide. This guide or camp like surface sprays the legs once the connecting portion 38 of leg 31 rotates into connect with the camp surface.

In Fig. 6, it can be seen that the legs have rotated and are now under the influence of the camp surface and are sprayed outward.

It should also be noted that the surface 26 as shown on leg 30 in Figs. 5 and 6 is not perpendicular to the principal axis of the leg 30. Instead, it is designed to make and abut the rear edge 27 of the sidewall 2 and must accommodate the sprayed nature of the leg 30.

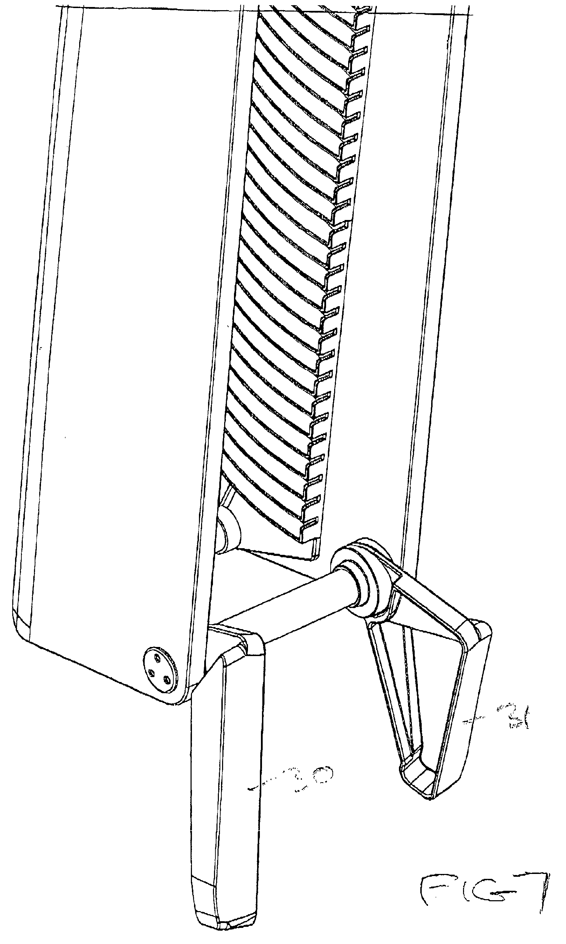

Fig. 7 is a further view of the lower portion of this embodiment in which the legs 30 and 31 are in an intermediate position being partially rotated between the first and second positions.

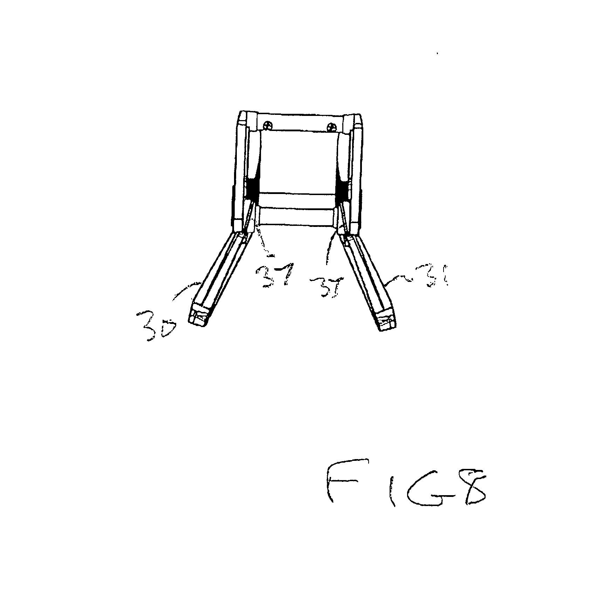

Referring to Fig. 8, an underside view of this tower model can be seen to show the position and extent of the camp surface 37 on each of the connections for the legs 30 and 31.

Thus it can be seen that this invention provides storage units for media containers that may adopt relatively high height to width or depth ratios and use extending legs for greater stability in one orientation. However, in another orientation, the unit may still stand vertically on a support surface.

By doing so, the user has a choice of orientations for the unit and even when positioned adjacent to wall, as the choice of fixing the unit to the wall and standing vertically or leaning the unit back with the legs extended. Alternatively, the user may choose to simply vertically freestand the unit without connection to a wall and this may be a more suitable arrangement if the user has the unit surrounded by furniture to decrease the likelihood of the unit falling over.

This invention has been described with reference to preferred embodiments and it should be noted that other embodiments will become apparent to those skilled in the art to which the invention relates. This description of preferred embodiment is not to be considered limiting to the scope of the invention. Specific integers referred to in the description are deemed to incorporate known equivalents where appropriate.

## Claims

1. A storage unit for holding a plurality of substantially regular-shaped media containers comprising:
- at least two support members;
- a plurality of retaining means to hold said substantially regular-shaped media containers connected to said support members;
- a base support movable between at least a first and a second position;
- wherein said base support is substantially within the area defined by a projection of said plurality of retaining means and forms at least a part of an underside on which said storage unit may rest on a support surface when in said first position; and
- wherein said base support extends to contact a support surface beyond the area defined by the projection of said plurality retaining means when in said second position,

2. A storage unit for holding a plurality of substantially regular-shaped media containers as claimed in claim 1 wherein said at least two support members comprise at least two sidewalls.

3. A storage unit for holding a plurality of substantially regular-shaped media containers as claimed in claim 2 wherein said plurality of retaining means are contained within said sidewalls.

4. A storage unit for holding a plurality of substantially regular-shaped media containers as claimed in claim 2 wherein said base support is substantially within the area defined by a projection of said at least two sidewalls when in said first position and said base support extends beyond the area defined by the projection of said at least two sidewalls when in said second position.

5. A storage unit for holding a plurality of substantially regular-shaped media containers as claimed in claim 1 wherein said base support extends to contact a support surface behind said storage unit.

6. A storage unit for holding a plurality of substantially regular-shaped media containers as claimed in claim 1 wherein said storage unit is tilted backwards in the direction of the said base support when said base support is in said second position.

7. A storage unit for holding a plurality of substantially regular-shaped media containers as claimed in claim 2 wherein said sidewalls have at least front, rear and bottom edges.

8. A storage unit for holding a plurality of substantially regular-shaped media containers as claimed in claim 7 wherein a substantially portion of said bottom edge is provided at non-perpendicular angle to said front or rear edges such that at least a front portion of said bottom edge may contact a support surface when said unit is leaned backwards with said base support extended in said second position.

9. A storage unit for holding a plurality of substantially regular-shaped media containers as claimed in claim 7 wherein said base support provides a surface substantially perpendicular to said front or rear edges and forming at least a part of an underside of said unit when in said first position such that said unit may stand substantially vertically on said support surface.

10. A storage unit for holding a plurality of substantially regular-shaped media containers as claimed in claim 1 wherein said base support was mounted on at least one pivotal connection to rotate between said first and said second positions.

11. A storage unit for holding a plurality of substantially regular-shaped media containers as claimed in claim 2 wherein said base support is pivotally mounted to at least one of said sidewalls.

12. A storage unit for holding a plurality of substantially regular-shaped media containers as claimed in claim 11 wherein said base support is pivotally mounted towards a rear edge of at least one of said sidewalls.

13. A storage unit for holding a plurality of substantially regular-shaped media containers as claimed in claim 7 wherein said base support resides between the bottom edge of said sidewalls and said support surface when in said first position.

14. A storage unit for holding a plurality of substantially regular-shaped media containers as claimed in claim 13 wherein said base support provides an upper surface within an angle to cooperate and rest against said angled portion of said bottom edge of said sidewall and a lower surface to reside against a support surface.

15. A storage unit for holding a plurality of substantially regular-shaped media containers as claimed in claim 1 wherein said base support includes at least one extending portion that extends both behind said storage unit and extends to the side and beyond the plane of said sidewalls when in said second position.

16. A storage unit for holding a plurality of substantially regular-shaped media containers comprising:
- a main body portion;
- a plurality of media container retaining members in said main body portion;
- a base support portion supporting said main body portion in a substantially vertical orientation on a horizontal support surface when in a first position; and
- at least a portion of said base support portion extending rearward of the main body portion when in a second position.
